# EUROPEAN PATENT APPLICATION

(11) **EP 4 601 248 A1**
(43) Date of publication of application: **13.08.2025**
(21) Application number: 24307160.2
(22) Date of filing: 18.12.2024
(51) Int. Cl.: H04L 12/40

(54) **METHOD AND APPARATUS FOR COMMUNICATION, AND STORAGE MEDIUM**

(30) Priority: 08.02.2024 CN 202410178997
(71) Applicant: SCHNEIDER ELECTRIC INDUSTRIES SAS, 92500 Rueil-Malmaison (FR)
(72) Inventor: YING, Xiaoping, Shanghai, 201203 (CN)
(74) Representative: Manitz Finsterwald Patent- und Rechtsanwaltspartnerschaft mbB

(57) **Abstract**

Embodiments of the disclosure, a method and apparatus for communication, and a storage medium. According to embodiments of the present disclosure, a first device determines a virtual identification of a second device that is dedicated to the first device, wherein the virtual identification is configured to indicate the second device as an end point of a data transmission in a controller area network, CAN, communication from the second device to the first device, and the virtual identification is different from a physical node identification of the second device; and data is sent to the second device based on the virtual identification. In this way, the identifies of node identifications of a plurality of first devices at the same time by the second device can advantageously be realized to ensure reliable transmission and correct processing of data between the devices.

## Description

### FIELD

Example embodiments of the present disclosure relate generally to the field of electrical devices, and in particular to method, apparatus for communication, and computer-readable storage medium.

### BACKGROUND

In a conventional application scenario of a controller area network (CAN) device, there is usually one master device and a plurality of slave devices form a network. The master device is responsible for controlling and managing the entire network, and the slave device executes an instruction of the master device and provides corresponding data. However, when a plurality of slave devices report data to the master device at the same time, if they all use the same node identification, data collision on the bus may be caused.

### SUMMARY

Embodiments of the present disclosure provide a method and apparatus for communication, and a computer-readable storage medium.

In a first aspect of the present disclosure, a method for communication is provided. In the method, determining, by a first device, a virtual identification of a second device dedicated to the first device, wherein the virtual identification is configured to indicate the second device as an end point of a data transmission in a controller area network, CAN, communication from the second device to the first device, and the virtual identification is different from a physical node identification of the second device; and sending data to the second device based on the virtual identification.

In some embodiments of the first aspect, the virtual identification of the second device dedicated to the first device is assigned by the second device based on a physical node identification of the first device.

In some embodiments of the first aspect, the CAN communication is based on a CAN Open protocol.

In some embodiments of the first aspect, sending the data includes: generating a target data frame based on the virtual identification and the data; sending the target data frame to the second device.

In some embodiments of the first aspect, the target data frame is a data frame having a format supported by the CAN Open protocol, and wherein the virtual identification is indicated in a target address field of the data frame.

In some embodiments of the first aspect, the first device is a slave device for the CAN communication, and the second device is a master device for the CAN communication.

In a second aspect of the present disclosure, a method for communication is provided. In the method, in response to receiving data , determining, by a second device, a virtual identification of the second device associated with the data; and in response to determining that the virtual identification is a virtual identification of the second device dedicated to the first device, determining that the data is sent by the first device, wherein the virtual identification is configured to indicate the second device as an end point of data transmission in a controller area network, CAN, communication from the second device to the first device, and the virtual identification is different from a physical node identification of the second device.

In some embodiments of the second aspect, the virtual identification of the second device dedicated to the first device is assigned by the second device based on a physical node identification of the first device.

In some embodiments of the second aspect, the method further includes sending data to the first device based on the node identification of the first device.

In some embodiments of the second aspect, the CAN communication is based on a CAN Open protocol.

In some embodiments of the second aspect, receiving the data includes receiving a data frame generated based on the data and the virtual identification of the second device dedicated to the first device.

In some embodiments of the second aspect, the first device is a slave device for the CAN communication, and the second device is a master device for the CAN communication.

In a third aspect of the present disclosure, an apparatus for communication is provided. The apparatus includes at least one processing unit; and at least one memory coupled to the at least one processing unit and storing instructions for execution by the at least one processing unit, which when executed by the at least one processing unit, cause the apparatus to perform the method of the first aspect.

In a fourth aspect of the present disclosure, an apparatus for communication is provided. The apparatus includes at least one processing unit; and at least one memory coupled to the at least one processing unit and storing instructions for execution by the at least one processing unit, which when executed by the at least one processing unit, cause the apparatus to perform the method of the second aspect.

In a fifth aspect of the present disclosure, a machine-readable storage medium is provided, where the machine readable storage medium stores a program, and the program is executable by a processor to implement the method in the first aspect or the method in the second aspect.

As will be understood from the following description, according to embodiments of the present disclosure, a plurality of first devices can report data to a second device simultaneously by means of a virtual identification, and communication on a CAN bus is realized, so that data collision on the bus can be avoided, and reliable transmission and correct processing of data between devices can be further realized. Other benefits will be described below in conjunction with corresponding embodiments.

It should be understood that the content described in this content part is not intended to limit the key features or important features of embodiments of the present disclosure, nor is it intended to limit the scope of the present disclosure. Other features of the present disclosure will become apparent from the description below.

### BRIEF DESCRIPTION OF THE DRAWINGS

The above and other features, advantages, and aspects of various embodiments of the present disclosure will become more apparent with reference to the following detailed description taken in conjunction with the accompanying drawings. In the drawings, the same or similar reference numbers represent the same or similar elements, where:
FIG. 1 illustrates a schematic diagram of a communications environment in which embodiments of the present disclosure can be implemented;
FIGS. 2A and 2B illustrate flow diagrams of communication processes, according to some embodiments of the present disclosure;
FIG. 3 illustrates a flow diagram of a communication process for a first device, according to some embodiments of the present disclosure;
FIG. 4 illustrates a flow diagram of a communication process for a second device, according to some embodiments of the present disclosure; and
FIG. 5 illustrates a block diagram of a device capable of implementing various embodiments of the present disclosure.

### DETAILED DESCRIPTION

It should be understood that, before the technical solutions disclosed in embodiments of the present disclosure are used, the user should be informed of the type of the personal information, the usage range, the usage scenario, and the like related to the present disclosure in an appropriate manner and the authorization of the user should be obtained according to relevant legal regulations.

For example, in response to receiving an active request from a user, prompt information is sent to the user to explicitly prompt the user that an operation requested by the user will require acquisition and use of personal information of the user. Thus, the user can autonomously select, according to the prompt information, whether to provide personal information to software or hardware such as an electronic device, an application program, a server, or a storage medium that executes the operations of the technical solutions of the present disclosure.

As an optional but non-limiting implementation, in response to receiving an active request of a user, a manner of sending prompt information to the user may be, for example, a manner of a pop-up window, where the pop-up window may present the prompt information in a text manner. In addition, the popup window may also carry a selection control for the user to select ' agree' or ' don't agree' to provide personal information to the electronic device.

It can be understood that, the above notification and acquisition of the user authorization process are merely exemplary, and do not limit the implementation of the present disclosure, and other methods meeting relevant legal regulations may also be applied to the implementation of the present disclosure.

It is to be understood that the data involved in the technical solution (including but not limited to the data itself, the acquisition or use of the data) should comply with the requirements of the corresponding legal regulations and related provisions.

Embodiments of the present disclosure will be described in more detail below with reference to the accompanying drawings. Although certain embodiments of the present disclosure are shown in the accompanying drawings, it should be understood that the present disclosure may be implemented in various forms and should not be construed as limited to embodiments set forth herein, but rather, these embodiments are provided for a thorough and complete understanding of the present disclosure. It should be understood that the drawings and embodiments of the present disclosure are only for illustrative purposes and are not intended to limit the scope of the present disclosure.

It should be noted that the headings of any section/subsection provided herein are not limiting. Various embodiments are described throughout herein, and any type of embodiment can be included under any section/subsection. Furthermore, embodiments described in any section/subsection may be combined in any manner with any other embodiments described in the same section/subsection and/or different sections/subsections.

In the description of embodiments of the present disclosure, the term "comprise" and similar terms should be interpreted as open inclusion, that is, "including but not limited to". The term "based on" should be interpreted as "based at least in part on". The term "an embodiment" or "the embodiment" should be interpreted as "at least one embodiment". The term "some embodiments" should be interpreted as "at least some embodiments". Other explicit and implicit definitions may also be included below. The terms "first", "second", etc. may refer to different or identical objects. Other explicit and implicit definitions may also be included below.

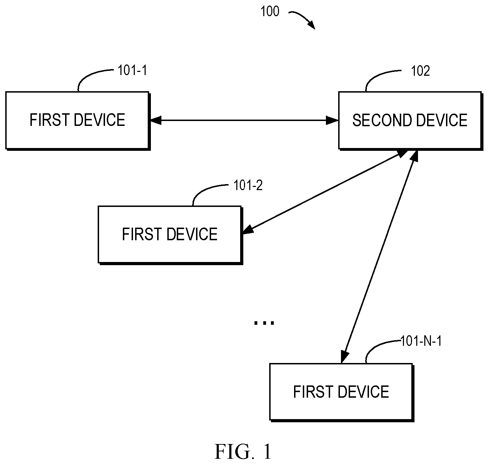

FIG. 1 illustrates a schematic diagram of an example of a communication environment 100 according to some embodiments of the present disclosure. In the communication environment 100, a plurality of first devices 101-1, 101-2,... , 101-N-1 and second devices 102 are deployed, and the plurality of first devices 101-1, 101-2,... , 101-N-1 may communicate with the second devices 102 respectively to implement data transmission. Hereinafter, a plurality of first devices 101-1, 101-2,... , 101-N-1 may also be collectively referred to as a first device 101.

In some embodiments, the plurality of first devices 101-1, 101-2, ..., 101-N-1 may respectively communicate with the second device 102 based on the CAN protocol, in particular the CAN open protocol. The plurality of first devices 101-1, 101-2,... , 101-N-1 and second devices 102 may be any type of communication device capable of supporting CAN protocol based communication.

It should be appreciated that communication environment 100 may include any number of first and second devices, embodiments of the present disclosure of which are not limited in this regard.

In some embodiments, especially in a communication environment based on a CANopen protocol, the second device 102 may be a master device, and a plurality of first devices 101-1, 101-2,... , and 101-N-1 may serve as slave devices of the second device 102. It should be understood that, in other communication scenarios, the second device 102 may also be used as a slave device of another communication device, and one or more of the first devices 101-1, 101-2,... , and 101-N-1 may also be used as a master device of another communication device. Embodiments of the present invention are not limited in this aspect.

Each of the CANOpen devices of the first device 101 and the second device 102 has a corresponding node identification (Node ID), that is, a node address in the CANopen network, which is similar to an Internet Protocol (IP) address in the network. The Node ID is used to identify the uniqueness of the device in the CANOpen network. Through the Node ID, the master device may send instructions and receive data to the corresponding slave device.

However, in the CANopen protocol, if a plurality of slave devices send data to a master device at the same time, a bus data conflict may be caused because a data frame only carries a Node ID of the master device. On the one hand, the master device cannot determine from which slave device the data is sent, and on the other hand, the data packets may be cross-transmitted on the bus, resulting in data packet loss or damage. This may cause the master device to fail to correctly parse and process the data, resulting in communication errors or data loss. It should be noted that, in the CANopen protocol, the CANopen protocol does not support the addition of a new field due to the requirements of ensuring compatibility between devices, reliability of communication, and canonicity. In view of this, it would be desirable to provide a method for communication between devices to address one or more of the above technical problems, as well as other potential problems.

Embodiments of the present disclosure provide a communication solution. The plurality of first devices are separately configured with virtual identifications of respective dedicated second devices, so that data transmission can be performed with the second devices based on the virtual identifications of the respective dedicated second devices. In this way, even if a plurality of first devices sends data to a second device at the same time, bus data collision may be avoided.

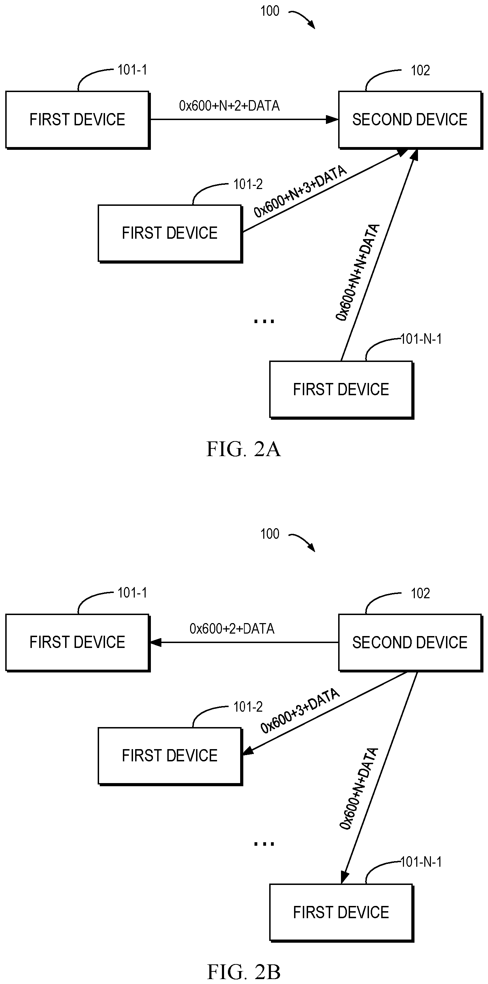

Example communication procedures between a slave device to a master device and a master device to a slave device are described below with respect to FIGS. 2A and 2B, respectively. The communication process of Figures 2A and 2B will be described in conjunction with the communication environment 100 shown in FIG. 1 for ease of description.

In a usage scenario in which a CANOpen device, such as a dual-power supply changeover switch, or a slave device requiring high real-time performance can also actively report data, the CANOpen is a communication protocol based on a CAN bus, and is used for real-time control and data exchange. A CAN in Automation (CiA) 301 specification is generally used between the master device and the slave device to perform data communication as a communication protocol.

As described above, in a CANOpen network, a Node ID refers to a unique identification of a destination device of a data frame, and the Node ID is used to determine a device to which the data frame should be sent. Through the Node ID, the device can identify whether itself is the destination of the data frame and process the received data accordingly. For example, the Node ID is 1, 2, 3, 4, 5, or other numerical values. For example, the Node ID of the first device 101-1 is 2, the Node ID of the first device 101-2 is 3, the Node ID of the first device 101-N-1 is N, and the Node ID of the second device 102 is 1.

In a CANOpen network, communication between a master device and a slave device is generally performed in a single-point communication through an SDO (Service Data Object). The SDO allows a master device to send a request to a slave device and acquire data provided by the slave device. This single-point communication method can ensure accurate transmission of data and provide data reading and writing functions at the same time.

In a CANOpen network, the COB-ID of the SDO data sent by the sender is 0x600 plus the Node ID of the destination. The COB-ID is used to associate the SDO data frame with the corresponding device to ensure that the data can be sent to the corresponding device correctly. It should be noted that, the COB-ID (Communication Object Identification ), that is, the data frame ID of a certain communication object in the CANopen, and the SDO (Service Data Object) is a type of message used to transmit parameters and configuration data between devices in the CANOpen protocol. Data arbitration is performed by using the COB-ID on the CAN bus, so that the sequence and integrity of data can be ensured, and data collision and confusion can be avoided.

In a CANOpen network, when a master device initiates a data request, the master device may send a request frame of a data frame (for example, a data frame format is COB-ID plus data (Data)) to each slave device at the same time. The COB-ID in these request frames corresponds to the data frame COB-ID of each slave. The plurality of slaves may receive the request simultaneously, and they may also respond to the request from the master device according to their own COB-ID.

Meanwhile, upon receiving the request, the slave device identifies that the request is for itself according to the COB-ID, and prepares a corresponding data frame. The slave device then sends a data frame back to the master device, which identifies and processes data from different slave devices based on the COB-ID of the data frame.

As shown in FIG. 2B, if the second device 102 sends data to the first device 101-1, the Node ID of the first device 101-1 is 2, the COB-ID may be represented as 0x600+2, and the data frame sent from the second device 102 to the first device 101-1 may be 0x600+2+data.

Accordingly, if the second device 102 sends data to the first device 101-2, the Node ID of the first device 101-2 is 3, the COB-ID may be represented as 0x600+3, and the data frame sent from the second device 102 to the first device 101-2 may be 0x600+3+data.

Accordingly, if the second device 102 sends data to the first device 101-N-1, the Node ID of the first device 101-N-1 is N, the COB-ID may be represented as 0x600+N, and the data frame sent from the second device 102 to the first device 101-N-1 may be 0x600+N+data.

Since a plurality of first devices 101-1, 101-2, ..., 101-N-1 respectively have a unique node identification (i.e., a Node ID), and data frames sent from the second device 102 respectively carry respective node identifications of the plurality of first devices 101-1, 101-2, ..., 101-N-1, the reliability and accuracy of data transmission can be ensured.

In the embodiment shown in FIG. 2A, a plurality of first devices 101-1, 101-2,... , 101-N-1 send data to a second device 102, in particular simultaneously to the second device 102.

Using first device 101-1 as an example, first device 101-1 can determine a virtual identification of a second device that is dedicated to first device 101-1. On the premise that the second device does not add a newly added field, the second device may add a virtual identification on the basis of the node identification of Node ID 1.

In some embodiments, the virtual identification may be separately configured by the second device 102 for each of the plurality of first devices 101 for CAN communication from the first device to the second device. That is, for each first device, the second device may be assigned a virtual identification dedicated to it which indicates the Node ID of the second device.

In some embodiments, the virtual identification may be associated with a node identification of the first device 101, respectively. For example, the Node ID of the first device 101-1 is 2, and the dedicated virtual ID of the second device is N+2; the Node ID of the first device 101-2 is 3, and the dedicated virtual ID of the second device is N+3. Node ID of the first device 101-N-1 is N, and the dedicated virtual ID of the second device is N+N.

Based on the virtual identification, the first device 101-1 may send data to the second device 102 at the same time.

The first device 101-1 generates a data frame based on a virtual identification of a second device dedicated to the first device 101-1 and data to be sent, for example, the data frame sent by the first device 101-1 to the second device 102 may be 0x600+N+2+data.

Once the second device 102 receives the data frame, the second device 102 may parse out that the data frame includes a virtual identification N+2, and determine that the virtual identification is a virtual identification of the second device 102 that is dedicated to the first device 101-1. Accordingly, the second device 102 may determine that the data frame is from the first device 101-1.

Correspondingly, the first device 101-2 generates a data frame based on a virtual identification of a second device dedicated to the first device 101-2 and data to be sent, for example, the data frame sent by the first device 101-2 to the second device 102 may be 0x600+N+3+data.

The first device 101-N-1 generates a data frame based on a virtual identification of a second device dedicated to the first device 101-N-1 and data to be sent, for example, the data frame sent by the first device 101-2 to the second device 102 may be 0x600+N+N+data.

Accordingly, similarly, the second device 102 may determine that the received data frame is from the first device 101-2 and the first device 101-N-1, respectively.

In this way, the second device 102 identifies and parses which device the data comes from by the received data frame, thereby avoiding data collision especially when a plurality of first devices simultaneously send data to the second device, thereby ensuring the reliability of CAN communication. Therefore, the data switching mechanism based on the virtual identifications may implement efficient communication and data transmission between a plurality of slave devices and the master device at the same time.

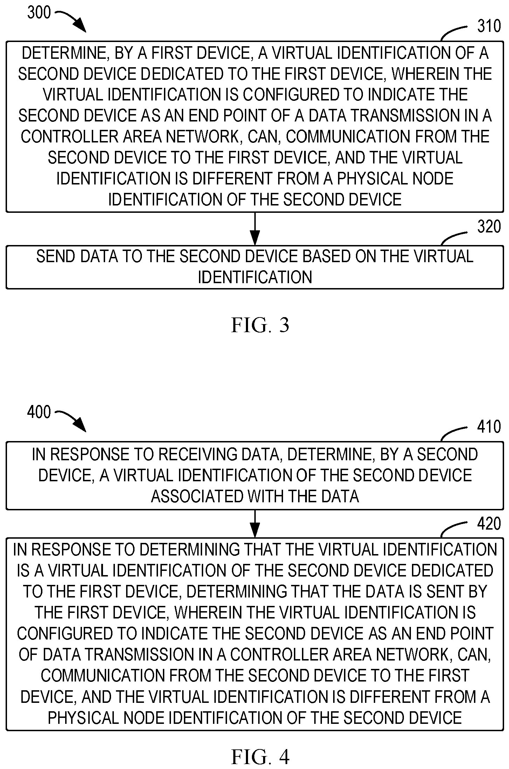

FIG. 3 illustrates a flow diagram of a communication process 300 of the first device 101 according to some embodiments of the present disclosure. For example, communication process 300 of first device 101 can be implemented at electrical system 100, particularly in some embodiments, at first device 101.

In block 310, the first device 101 determines a virtual identification of the second device 102 that is dedicated to the first device 101, wherein the virtual identification is configured to indicate the second device 102 as an end point of a data transmission in a controller area network, CAN, communication from the second device 102 to the first device 101, and the virtual identification is different from a physical node identification of the second device 102. At block 320, data is sent to the second device 102 based on the virtual identification.

In some embodiments, the virtual identification of the second device 102 dedicated to the first device 101 is assigned by the second device 102 based on a physical node identification of the first device 101.

In some embodiments, the CAN communication is based on a CAN Open protocol.

In some embodiments, sending the data includes generating a target data frame based on the virtual identification and the data; sending the target data frame to the second device 102.

In some embodiments, the target data frame is a data frame having a format supported by the CAN Open protocol, and wherein the virtual identification is indicated in a target address field of the data frame.

In some embodiments, the first device 101 is a slave device for the CAN communication, and the second device 102 is a master device for the CAN communication.

FIG. 4 illustrates a flow diagram of a communication process 400 for a second device 102 according to some embodiments of the present disclosure. For example, the communication process 400 for the second device 102 can be implemented at the electrical system 100, specifically in some embodiments, at the second device 102.

At block 410, in response to receiving the data, the second device 102 determines a virtual identification of the second device 102 that is associated with the data. At block 420, in response to determining that the virtual identification is a virtual identification of the second device 102 that is dedicated to the first device 101, it is determined that the data is sent by the first device 101, wherein the virtual identification is configured to indicate the second device 102 as an end point of data transmission in a controller area network, CAN, communication from the second device 102 to the first device 101, and the virtual identification is different from a physical node identification of the second device 102.

In some embodiments, the virtual identification of the second device 102 that is dedicated to the first device 101 is assigned by the second device 102 based on the physical node identity of the first device 101.

In some embodiments, the communication process 400 of the second device 102 sends data to the first device 101 based on the node identification of the first device 101.

In some embodiments, CAN communication is based on the CANOpen protocol.

In some embodiments, receiving the data includes receiving a data frame generated based on the data and a virtual identification of the second device 102 dedicated to the first device 101.

In some embodiments, the first device 101 is a slave device for the CAN communication, and the second device 102 is a master device for the CAN communication.

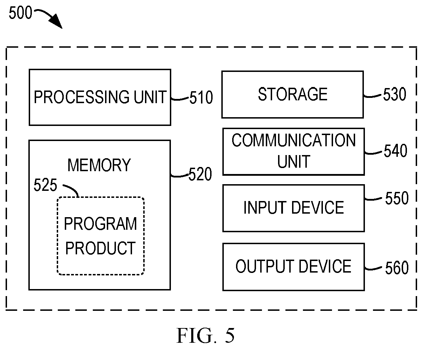

FIG. 5 illustrates a block diagram of a device 500 capable of implementing various embodiments of the present disclosure. The device 500 (e.g., a communication apparatus) may be the first device 101 or the second device 102. It should be understood that the electronic device 500 shown in FIG. 5 is merely exemplary, and should not constitute any limitation on the functions and scope of the embodiments described herein.

As shown in FIG. 5, the electronic device 500 is in the form of a generic electronic device. The components of the electronic device 500 may include, but are not limited to, one or more processors or processing units 510, memory 520, storage 530, one or more communication units 540, one or more input devices 550, and one or more output devices 560. The processing unit 510 may be a real or virtual processor and may be capable of performing various processes according to programs stored in the memory 520. In a multiprocessor system, a plurality of processing units execute computer executable instructions in parallel to improve the parallel processing capability of the electronic device 500.

The electronic device 500 typically includes a plurality of computer storage medium. Such medium may be any available medium that is accessible to the electronic device 500, including, but not limited to, volatile and non-volatile medium, removable and non-removable medium. Memory 520 may be volatile memory (e. g., registers, cache, random access memory (RAM)), non-volatile memory (e. g., read-only memory (ROM), electrically erasable programmable read-only memory (EEPROM), flash memory), or some combination thereof. Storage 530 may be a removable or non-removable medium and may include a machine-readable medium such as a flash drive, a magnetic disk, or any other medium that may be used to store information and/or data and that may be accessed within electronic device 500.

The electronic device 500 may further include additional removable/non-removable, volatile/nonvolatile storage medium. Although not shown in FIG. 5, a magnetic disk drive for reading from or writing to a removable, nonvolatile magnetic disk such as a "floppy disk" and an optical disk drive for reading from or writing to a removable, nonvolatile optical disk may be provided. In these cases, each drive may be connected to a bus (not shown) by one or more data media interfaces. Memory 520 may include a computer program product 525 having one or more program modules configured to perform various methods or actions of various embodiments of the present disclosure.

The communication unit 540 implements communication with other electronic devices through a communication medium. In addition, functions of components of the electronic device 500 may be implemented by a single computing cluster or a plurality of computing machines, and these computing machines can communicate through a communication connection. Accordingly, the electronic device 500 may operate in a networked environment using logical connections to one or more other servers, network personal computers (PCs), or another network node.

Input device 550 may be one or more input devices such as a mouse, keyboard, trackball, etc. Output device 560 may be one or more output devices such as a display, speakers, printer, etc. The electronic device 500 may also communicate with one or more external devices (not shown), such as storage devices, display devices, etc. , as needed through the communication unit 540, with one or more devices that enable a user to interact with the electronic device 500, or with any device (e. g., network card, modem, etc. ) that enables the electronic device 500 to communicate with one or more other electronic devices. Such communication may be performed via an input/output (I/O) interface (not shown).

According to an exemplary implementation of the present disclosure, a machine-readable storage medium is further provided, on which a machine-executable instruction is stored, wherein the machine-executable instruction is executed by a processor to implement the method described above. According to an exemplary implementation of the present disclosure, there is also provided a program product, which is tangibly stored on a non-transitory machine-readable medium and includes machine executable instructions that are executed by a processor to implement the method described above.

Aspects of the present disclosure are described herein with reference to flowchart illustrations and/or block diagrams of methods, apparatus, devices and program products implemented in accordance with the present disclosure. It will be understood that each block of the flowchart illustrations and/or block diagrams, and combinations of blocks in the flowchart illustrations and/or block diagrams, can be implemented by machine-readable program instructions.

These machine-readable program instructions may be provided to a processing unit of a general purpose computer, special purpose computer, server, single chip computer, or other programmable data processing apparatus, thereby producing a machine such that the instructions, when executed by the machine, programmable data processing apparatus, and/or other devices, An apparatus is generated that implements the functions/acts specified in the flowchart and/or block diagram block or blocks. These machine-readable program instructions may also be stored in a machine-readable storage medium that can direct a machine, programmable data processing apparatus, and/or other devices to function in a particular manner, such that the machine-readable medium storing the instructions includes an article of manufacture including instructions which implement various aspects of the functions/acts specified in the flowchart and/or block diagram block or blocks.

The machine-readable program instructions may be loaded onto a machine, other programmable data processing apparatus, or other device, causing a series of operational steps to be performed on a machine, other programmable data processing apparatus, or other devices, to produce a machine-implemented process such that the instructions which execute on the machine, other programmable data processing apparatus, or other devices implement the functions/acts specified in the flowchart and/or block diagram block or blocks.

The flowchart and block diagrams in the Figures illustrate the architecture, functionality, and operation of possible implementations of systems, methods and program products according to various implementations of the present disclosure. In this regard, each block in the flowchart or block diagrams may represent a module, segment, or portion of an instruction which includes one or more executable instructions for implementing the specified logical function(s). In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and machine instructions.

Implementations of the present disclosure have been described above. The above description is illustrative, not exhaustive, and is not limited to the disclosed implementations. Many modifications and variations will be apparent to those of ordinary skill in the art without departing from the scope and spirit of the described implementations. The terminology used herein is chosen to best explain the principles, practical applications, or improvements to the technology in the market, or to enable other persons of ordinary skill in the art to understand the various implementations disclosed herein.

## Claims

1. A method for communication, comprising:
determining (310), by a first device, a virtual identification of a second device dedicated to the first device, wherein the virtual identification is configured to indicate the second device as an end point of a data transmission in a controller area network, CAN, communication from the second device to the first device, and the virtual identification is different from a physical node identification of the second device; and
sending (320) data to the second device based on the virtual identification.

2. The method of claim 1, wherein the virtual identification of the second device dedicated to the first device is assigned by the second device based on a physical node identification of the first device.

3. The method of claim 1, wherein the CAN communication is based on a CAN Open protocol.

4. The method of claim 1, wherein sending the data comprises:
generating a target data frame based on the virtual identification and the data;
sending the target data frame to the second device.

5. The method of claim 4, wherein the target data frame is a data frame having a format supported by the CAN Open protocol, and wherein the virtual identification is indicated in a target address field of the data frame.

6. The method of any of claims 1 to 5, wherein the first device is a slave device for the CAN communication, and the second device is a master device for the CAN communication.

7. A method for communication, comprising:
in response to receiving data, determining (410), by a second device, a virtual identification of the second device associated with the data; and
in response to determining (420) that the virtual identification is a virtual identification of the second device dedicated to the first device, determining that the data is sent by the first device, wherein the virtual identification is configured to indicate the second device as an end point of data transmission in a controller area network, CAN, communication from the second device to the first device, and the virtual identification is different from a physical node identification of the second device.

8. The method of claim 7, wherein the virtual identification of the second device dedicated to the first device is assigned by the second device based on a physical node identification of the first device.

9. The method of claim 7, further comprising:
sending data to the first device based on the physical node identification of the first device.

10. The method of claim 7, wherein the CAN communication is based on a CAN Open protocol.

11. The method of claim 7, wherein receiving the data comprises:
receiving a data frame generated based on the data and the virtual identification of the second device dedicated to the first device.

12. The method of any of claims 7 to 11, wherein the first device is a slave device for the CAN communication, and the second device is a master device for the CAN communication.

13. An apparatus for communication, comprising:
at least one processing unit; and
at least one memory coupled to the at least one processing unit and storing instructions for execution by the at least one processing unit, which when executed by the at least one processing unit, cause the apparatus to perform the method according to any of claims 1 to 6.

14. An apparatus for communication, comprising:
at least one processing unit; and
at least one memory coupled to the at least one processing unit and storing instructions for execution by the at least one processing unit, which when executed by the at least one processing unit, cause the apparatus to perform the method according to any of claims 7 to 12.

15. A machine-readable storage medium having stored thereon a program executable by a processor to implement a method according to any of claims 1 to 6 or 7 to 12.
